# EUROPEAN PATENT APPLICATION

(11) **EP 4 760 447 A1**
(43) Date of publication of application: **17.06.2026**
(21) Application number: 24860153.6
(22) Date of filing: 05.07.2024
(51) Int. Cl.: G06F 1/16, G06F 3/01, H01M 10/04

(54) **ELECTRONIC DEVICE INCLUDING CONNECTION STRUCTURE OF BATTERY AND SUBSTRATE**

(30) Priority: 25.08.2023 KR 20230112354; 27.09.2023 KR 20230131210
(71) Applicant: Samsung Electronics Co., Ltd., Suwon-si, Gyeonggi-do 16677 (KR)
(72) Inventor: JANG, Kiyoun, Suwon-si Gyeonggi-do 16677 (KR); KIM, Shihyun, Suwon-si Gyeonggi-do 16677 (KR); KIM, Sunjin, Suwon-si Gyeonggi-do 16677 (KR); YUN, Yongsang, Suwon-si Gyeonggi-do 16677 (KR); HUR, Juneyoung, Suwon-si Gyeonggi-do 16677 (KR)
(74) Representative: Gulde & Partner
(86) International application number: PCT/KR2024/009585
(87) International publication number: WO 2025/048230

(57) **Abstract**

This electronic device comprises: a battery including a first case, a second case, and at least one battery cell including a first electrode electrically connected to the first case and a second electrode electrically connected to the second case; and a housing including a rod at least partially inserted into the first case and the second case and electrically connected to the at least one battery cell, and a body extending from the rod and positioned outside the battery housing. The rod is configured to provide an electrical path for power provided from the battery.

## Description

### [Technical Field]

The present disclosure relates to an electronic device including a connection structure of a battery and a substrate.

### [Background Art]

An electronic device may include a wearable device that may be worn on a body of a user. For example, the wearable device may provide various functions such as a position tracking function, an activity information measuring function of the user, and a communication function, by being worn on a wrist, a finger, and/or ears of the user. The wearable device may include an electronic component for providing the various functions. The electronic component included in the wearable device may operate using power provided from a battery. For example, the wearable device may include battery protection circuitry for protecting the battery. The electronic component and/or battery protection circuitry may be electrically connected to the battery.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device is provided. The electronic device may comprise a battery. The battery may include a first case including a first through hole, a second case, including a second through hole at least partially aligned with the first through hole, coupled to the first case, and at least one battery cell accommodated in the first case and the second case, the at least one battery cell including a first electrode electrically connected to the first case, and a second electrode electrically connected to the second case. The electronic device may comprise a housing including a rod at least partially inserted into the first through hole and the second through hole, and electrically connected to the at least one battery cell by being electrically connected to the first electrode and the second electrode, and a body extending from the rod. The rod may be configured to provide an electrical path for power provided from the battery.

An electronic device is provided. The electronic device may comprise a battery housing including a first case, a second case coupled to the first case, and a through hole penetrating the first case and the second case. The electronic device may comprise at least one battery cell including a first electrode electrically connected to the first case and a second electrode electrically connected to the second case and accommodated in the battery housing. The electronic device 101 may comprise a housing including a rod at least partially inserted into the through hole and electrically connected to the at least one battery cell by being electrically connected to the first electrode and the second electrode, and a body extending from the rod. The electronic device may comprise a first substrate disposed in the body and on which an electronic component for the electronic device is disposed. The electronic device may comprise a second substrate disposed in the battery housing and on which battery protection circuitry is disposed. The rod may be configured to provide an electrical path of power provided from the at least one battery cell to at least one of the first substrate or the second substrate.

### [Description of the Drawings]

FIG. 1 is a block diagram of an electronic device in a network environment according to various embodiments.
FIG. 2 illustrates a state in which an electronic device is worn according to an embodiment.
FIG. 3A illustrates a first case and a second case of a battery according to an embodiment.
FIG. 3B is a cross-sectional view of a battery taken along line A-A' of FIG. 3A according to an embodiment.
FIG. 4 illustrates an electronic device including a first substrate according to an embodiment.
FIG. 5 illustrates an electronic device including a second substrate according to an embodiment.
FIG. 6 illustrates an electronic device including a fastening structure according to an embodiment.
FIG. 7 illustrates a through hole into which a rod is inserted.
FIGS. 8A and 8B illustrate an electronic device according to an embodiment.
FIG. 9 illustrates an electronic device including a fixing structure according to an embodiment.
FIG. 10 illustrates an electronic device including a ring-shaped housing according to an embodiment.

### [Mode for Invention]

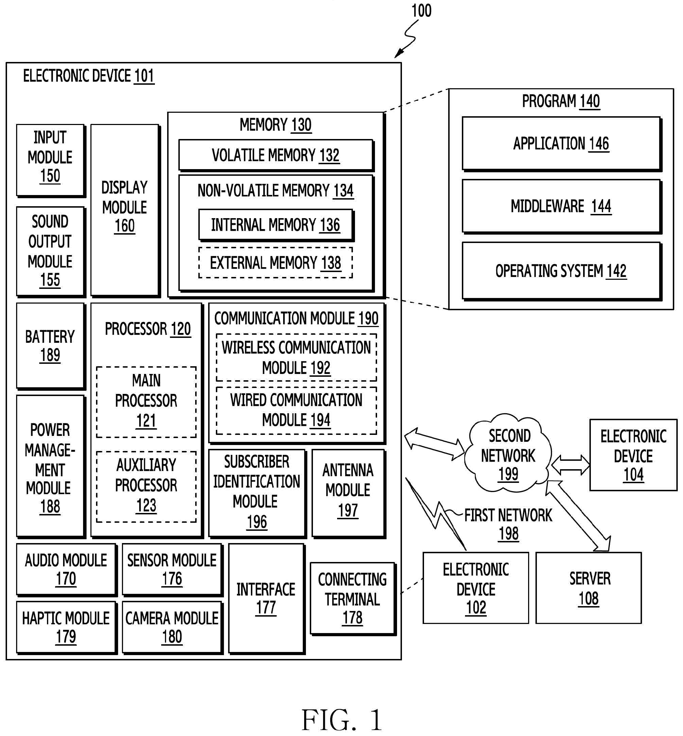

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

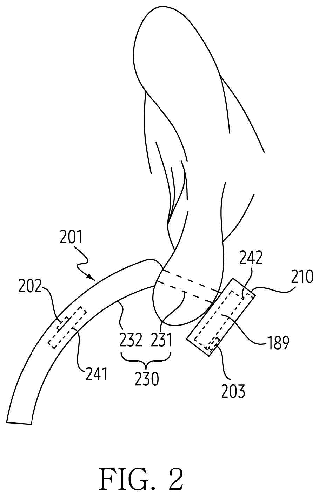

FIG. 2 illustrates a state in which an electronic device is worn according to an embodiment.

According to an embodiment, an electronic device 201 (e.g., the electronic device 101 of FIG. 1) may be implemented as a wearable device that may be worn on a body of a user. For example, the electronic device 201 may be referred to as an earring-type device worn on an ear of the user. In the present disclosure, the electronic device 201 is described as the earring-type device, but the electronic device 201 is not limited to the earring-type device. According to an embodiment, the electronic device 201 may be applied to a device that may be worn on a portion of the body of the user different from the ear of the user.

According to an embodiment, the electronic device 201 may provide various functions in a state of being worn on the body of the user. For example, the electronic device 201 may include an electronic component 202 for implementing various functions. For example, the electronic device 201 may include a global positioning system (GPS) module for providing position information, an antenna for communication with an external electronic device (e.g., a smartphone), a sensor for collecting health information and/or activity information of the user, and/or a speaker for providing a sound, but is not limited thereto. For example, the electronic device 201 may provide the various functions using the electronic component 202, and may be used as an accessory for representing personality of the user wearing the electronic device 201.

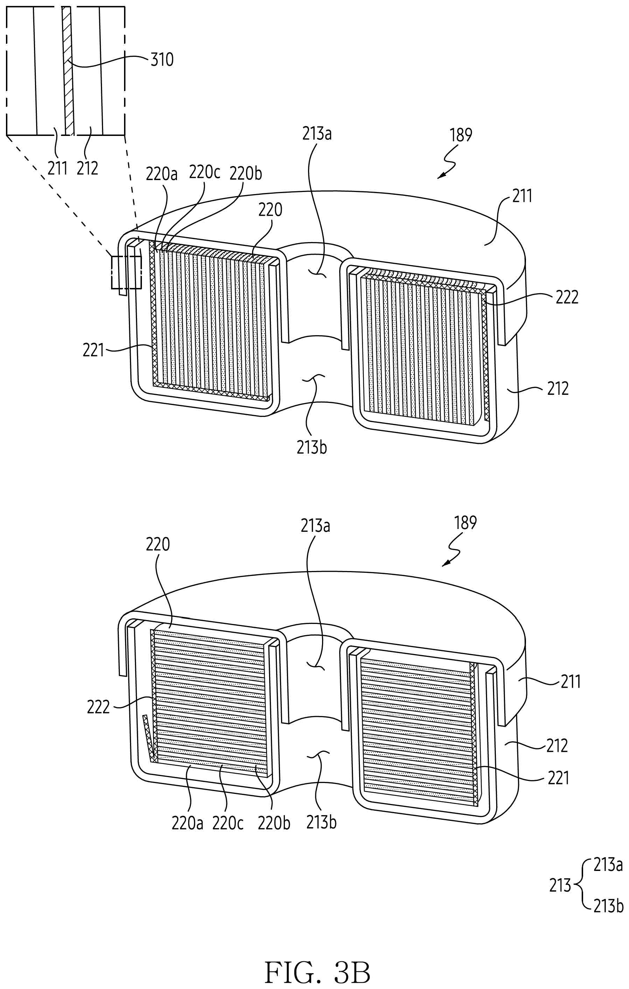

According to an embodiment, the electronic device 201 may include a battery 189. For example, the battery 189 may include at least one battery cell (e.g., a battery cell 220 of FIG. 3B) configured to provide power for operations of the electronic components 202. For example, at least one battery cell 220 may be configured to store power and supply the power to the electronic component 202. For example, the at least one battery cell 220 may be referred to as a rechargeable secondary battery. For example, the electronic component 202 may provide a designated function using the power provided from the at least one battery cell 220. For example, the electronic device 101 may include a battery housing 210 for accommodating the battery 189. For example, the battery 189 may be disposed in the battery housing 210.

According to an embodiment, the electronic device 201 may include a housing 230. For example, the housing 230 may accommodate the electronic component 202 for implementing the various functions. For example, the above-described electronic component 202 may be disposed in the housing 230. For example, the housing 230 and the battery housing 210 may be connected to each other.

According to an embodiment, the housing 230 may include a body 232 and a rod 231. For example, the body 232, which is a portion of the housing 230 exposed to an outside of the body of the user, may accommodate the electronic component 202 described above. For example, a first substrate 241 for providing an electrical connection of the electronic component 202 may be disposed in the body 232. For example, the electronic component 202 may be disposed on the first substrate 241 disposed in the body 232.

According to an embodiment, the electronic device may include a second substrate 242 disposed in the battery housing 210. For example, battery protection circuitry 203 (PCM, a protection circuit module) may be disposed on the second substrate 242. For example, the battery protection circuitry 203 may be configured to provide the various functions (e.g., a pre-blocking function) for reducing performance degradation and/or damage of the at least one battery cell 220. For example, the battery protection circuitry 203 may be configured as at least a portion of a battery management system (BMS) capable of performing various functions including cell balancing, capacity measurement of the at least one battery cell 220, charging/discharging count, temperature measurement, and/or voltage measurement. For example, the battery protection circuitry 203 may be electrically connected to the at least one battery cell 220 to perform the functions described above.

In the above description, it has been described that the electronic component 202 is disposed on the first substrate 241 disposed in the body 232, and the battery protection circuitry 203 is disposed on the second substrate 242 disposed in the battery housing 210, but it is not limited thereto. For example, at least a portion of the electronic component 202 may also be disposed on the second substrate 242. For example, the battery protection circuitry 203 may also be disposed on the first substrate 241.

As described above, the at least one battery cell 220 may be electrically connected to the electronic component 202 and/or the battery protection circuitry 203. For example, in order to provide power for an operation of the electronic component 202, an electrical connection between the at least one battery cell 220 and the electronic component 202 may be required. For example, in order to perform a function for protecting the at least one battery cell 220, an electrical connection between the at least one battery cell 220 and the battery protection circuitry 203 may be required. For example, since the electronic component 202 and/or the battery protection circuitry 203 are disposed on the first substrate 241 and/or the second substrate 242, an electrical connection between the at least one battery cell 220 and the first substrate 241 and/or an electrical connection between the at least one battery cell 220 and the second substrate 242 may be required. For example, an electrical connection between a ground layer in the first substrate 241 and/or the second substrate 242 and the at least one battery cell 220 may be required.

Hereinafter, in the electronic device 201, the electronic device 201 including a structure for providing the electrical connection between the at least one battery cell 220 and the first substrate 241 and/or the electrical connection between the at least one battery cell 220 and the second substrate 242 is described.

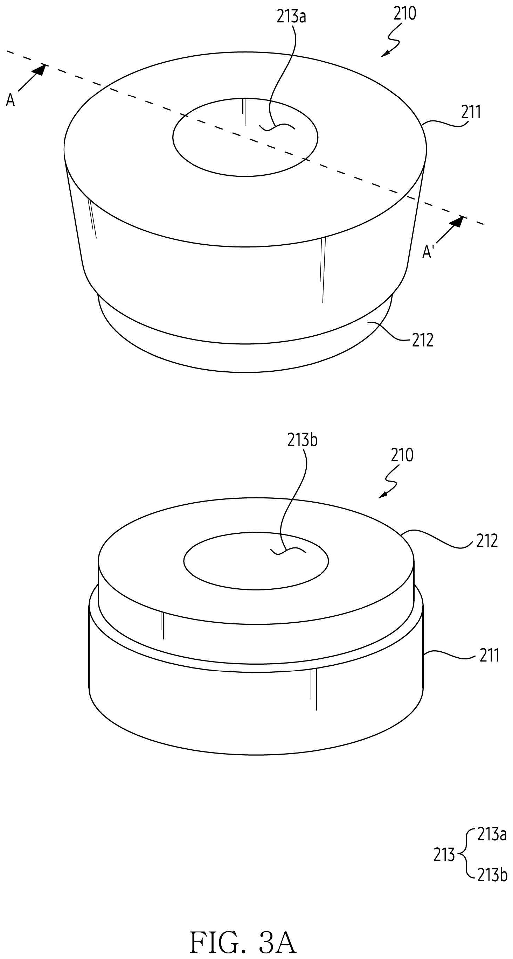

FIG. 3A illustrates a first case and a second case of a battery according to an embodiment. FIG. 3B is a cross-sectional view of a battery taken along line A-A' of FIG. 3A according to an embodiment.

Referring to FIG. 3A, a battery 189 may include a first case 211 and a second case 212. For example, a battery housing (e.g., the battery housing 210 of FIG. 2) may surround at least a portion of the battery 189 including the first case 211 and the second case 212.

For example, the first case 211 and the second case 212 may be fastened to each other. For example, a portion of the second case 212 may be fastened to the first case 211 by being inserted into the first case 211, but is not limited thereto. For example, as the first case 211 and the second case 212 are coupled, a battery with a substantially cylindrical shape may be formed. As illustrated in FIG. 3A, according to an embodiment, the battery 189 may be a coin cell type battery including a through hole.

According to an embodiment, the first case 211 may include a first through hole 213a. For example, the second case 212 may include a second through hole 213b at least partially aligned with the first through hole 213a. A through hole 213 may be formed by the first through hole 213a and the second through hole 213b aligned with each other.

Referring to FIG. 3B, at least one battery cell 220 may be disposed in the first case 211 and the second case 212. For example, the battery cell 220 may be disposed in an inner space formed by the first case 211 and the second case 212.

The battery 189 may be formed in various shapes according to a method, a shape, or a structure in which the battery cell 220 is disposed. According to an embodiment, 301 of FIG. 3B may be a winding type battery forming a jelly roll by winding a positive electrode material 220a, a negative electrode material 220b, and a separator 220c included in the at least one battery cell 220. According to an embodiment, 302 of FIG. 3B may be a stacking type battery in which the positive electrode material 220a, the negative electrode material 220b, and the separator 220c included in the at least one battery cell 220 are alternately stacked. However, a type of the battery 189 is not limited to the embodiment, and may be configured in various forms.

According to an embodiment, the at least one battery cell 220 may include a first electrode (e.g., a positive electrode) and a second electrode (e.g., a negative electrode). For example, the first electrode may be referred to as a positive electrode in which a cation (e.g., a lithium ion) receives an electron and is reduced at the time of discharge. For example, the first electrode may include the positive electrode material 220a coated with a positive electrode active material. For example, the first electrode may be electrically connected to the first case 211 through a first tab 221 electrically connected to the positive electrode material 220a. For example, the first tab 221 may be in contact with the first case 211.

According to an embodiment, the second electrode may be referred to as a negative electrode in which a cation (e.g., a lithium ion) emits an electron and is oxidized at the time of discharge. For example, the second electrode may include the negative electrode material 220b coated with a negative electrode active material. For example, the second electrode may be electrically connected to the second case 212 through a second tab 222 electrically connected to the negative electrode material 220b. For example, the separator 220c may be disposed between the positive electrode material 220a and the negative electrode material 220b such that the first electrode and the second electrode are not in contact with each other. The separator 220c may prevent a short circuit due to contact between the first electrode and the second electrode by physically separating the positive electrode material 220a and the negative electrode material 220b. For example, positions of the first tab 221 and the second tab 222 may be positioned in an opposite direction based on the at least one battery cell 220.

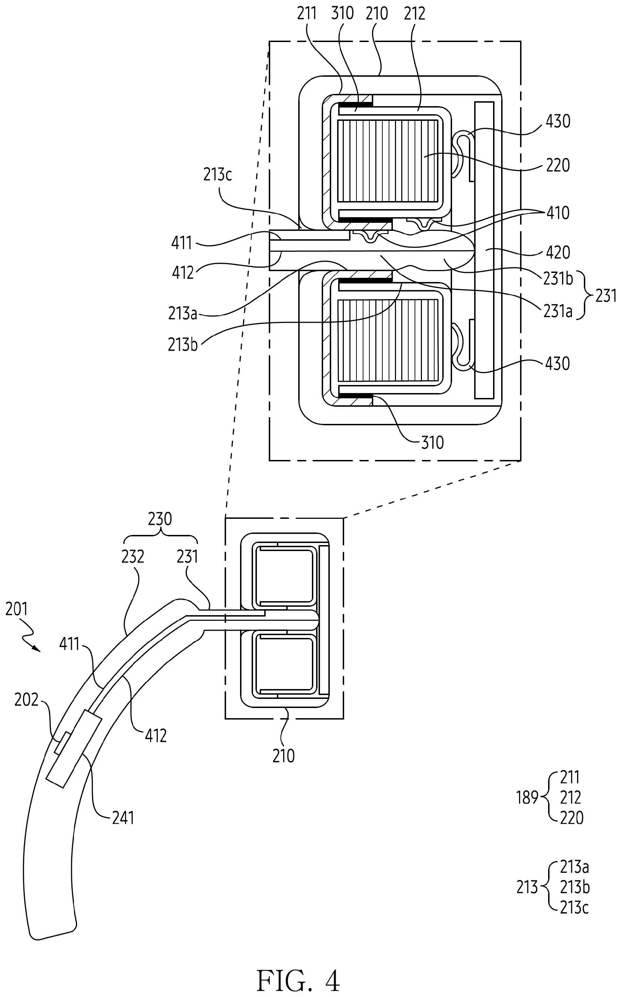

According to an embodiment, the battery 189 may include the through hole 213 into which a rod of a housing 230 (e.g., a rod 231 of FIG. 4) may be inserted. For example, the through hole 213 may be formed by a first through hole 213a passing through the first case 211 and a second through hole 213b passing through the second case 212. According to an embodiment, the through hole 213 may be formed in centers of the first case 211 and the second case 212. For example, in a case of a winding type battery, the positive electrode material 220a, the negative electrode material 220b, and the separator 220c may be wound around the through hole 213. For example, in a case of a stacking type battery, the positive electrode material 220a, the negative electrode material 220b, and the separator 220c may include a through hole corresponding to the through hole 213 through which the first case 211 and the second case 212 pass.

According to an embodiment, since the first case 211 is electrically connected to the first electrode and the second case 212 is electrically connected to the second electrode, a spacer 310 may be provided to electrically isolate the first case 211 and the second case 212. For example, the spacer 310 may be a dielectric for electrically isolating the first case 211 and the second case 212. For example, the spacer 310 may separate the first case 211 and the second case 212 by being disposed between the first case 211 and the second case 212.

FIG. 4 illustrates an electronic device including a first substrate according to an embodiment.

Referring to FIG. 4, an electronic device 201 may include a battery housing 210, a battery 189, a housing 230, and a first substrate 241.

According to an embodiment, the battery housing 210 may surround at least a portion of a first case 211 and a second case 212. For example, the first case 211 and the second case 212 may accommodate at least one battery cell 220 by being fastened to each other. The at least one battery cell 220 may be disposed in an inner space formed by the first case 211 and the second case 212. For example, the first case 211 and the second case 212 may be fastened by a portion of the second case 212 being inserted into the first case 211.

According to an embodiment, the battery 189 and the battery housing 210 may form a through hole 213 into which a rod 231 may be inserted. For example, the through hole 213 may extend from an outer surface of the battery housing 210 into the battery housing 210. For example, the through hole 213 may pass through the battery housing 210, and the first case 211 and the second case 212 of the battery 189. For example, the first case 211 may include a first through hole 213a. For example, the second case 212 may include a second through hole 213b at least partially aligned with the first through hole 213a. For example, the battery housing 210 may include a third through hole 213c at least partially aligned with the first through hole 213a and the second through hole 213b. The through hole 213 into which the rod 231 may be inserted may be formed by the first through hole 213a, the second through hole 213b, and the third through hole 213c. For example, the battery housing 210 and the housing 230 may be fastened by the rod 231 of the housing 230 being inserted into the through hole 213 of the battery housing 210.

According to an embodiment, at least a portion of the case (the first case 211 and/or the second case 212) of the battery 189 may be exposed to the through hole 213. The rod 231 of the housing 310 may be inserted into the through hole 213 of the battery 189, and a connection member 410 for an electrical connection of the rod 231 and the case exposed to the through hole 213 may be provided. For example, the connection member 410 formed in the case of the battery 189 may be formed in a direction of the through hole 213, and may have a protrusion shape integrally formed with the case of the battery 189. For example, the connection member 410 formed in the case of the battery 189 may be the member of the protrusion shape formed in the direction of the through hole 213, and may be the connection member 410 capable of providing elasticity. For another example, the connection member 410 may be molded such that a portion of the case includes the protrusion shape. For example, the connection member 410 may be implemented as the portion of the case, not as a separate component separated from the case. The case may be electrically connected to the rod 231 through the protrusion-shaped connection member 410.

According to an embodiment, the at least one battery cell 220 may include a first electrode and a second electrode. For example, the first electrode may be electrically connected to the first case 211. For example, the second electrode may be electrically connected to the second case 212. For example, a spacer 310 may be disposed between the first case 211 and the second case 212. Since the first case 211 is electrically connected to the first electrode and the second case 212 is electrically connected to the second electrode, a short circuit current may flow, in a case that the first case 211 and the second case 212 physically are in contact with each other. The short circuit current may cause a fire due to an abrupt increase in temperature by causing local heat. For example, the spacer 310 may be disposed between the first case 211 and the second case 212 to prevent a short circuit. For example, the spacer 310 may include a non-conductive material for electrically isolating the first case 211 and the second case 212.

According to an embodiment, the housing 230 may include the rod 231 and a body 232. For example, the rod 231 may be at least partially inserted into the through hole 213. For example, the rod 231 may be inserted into the through hole 213 in a fitted manner by having a thickness corresponding to a diameter of the through hole 213. For example, the rod 231 may be inserted into the through hole 213 by an external force, and after being inserted, the rod 231 may be fixed into the through hole 213 by the interference. However, a fastening method between the rod 231 and the through hole 213 is not limited to the embodiment, and the rod 231 may be fastened to the through hole 213 by various fastening methods.

According to an embodiment, the body 232 may be positioned outside the battery housing 210 by extending from the rod 231. For example, the body 232 may have a design capable of providing a visual effect. For example, the visual effect of the electronic device 201 may be enhanced by a shape of the body 232, a color of the body 232, and a pattern and a shape formed on an outer surface of the body 232. For example, since the electronic device 201 may be worn on a body of a user, it may provide an aesthetic function by providing a design suitable for preference of the user.

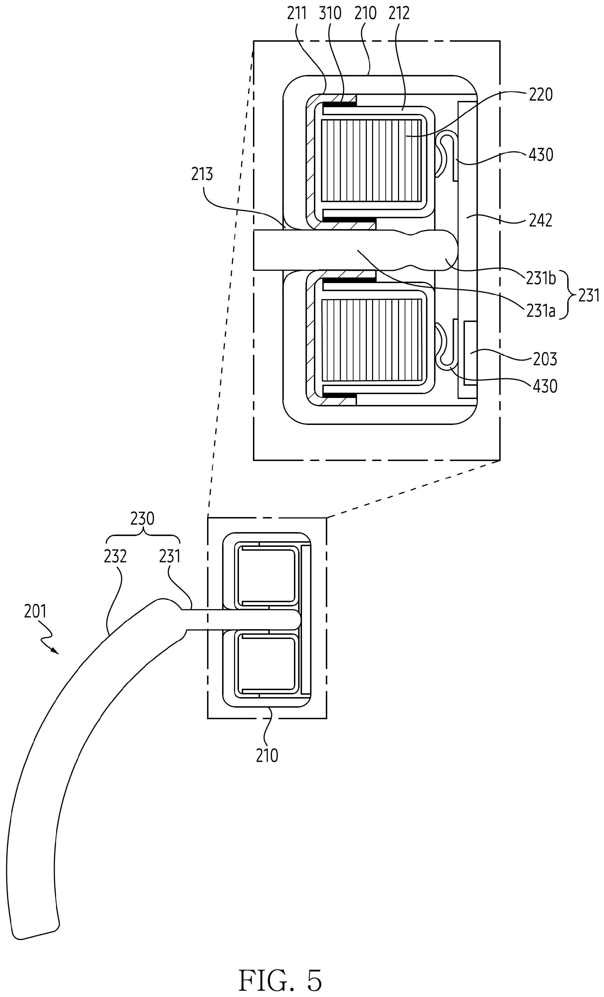

According to an embodiment, the first substrate 241 and/or a second substrate (e.g., a second substrate 242 of FIG. 5) may provide an electrical connection between components of the electronic device 201. For example, the first substrate 241 and/or the second substrate 242 may include a plurality of conductive layers and a plurality of non-conductive layers alternately stacked (or laminated) with the plurality of conductive layers. For example, the first substrate 241 and/or the second substrate 242 may provide an electrical connection between components using wirings and conductive vias formed on the conductive layer. For example, the first substrate 241 and/or the second substrate 242 may be a printed circuit board (PCB), a flexible PCB (FPCB), and/or a rigid FPCB (RFPCB), but is not limited thereto.

According to an embodiment, the first substrate 241 may be disposed in the body 232. The first substrate 241 disposed in the body 232 may be spaced apart from the battery housing 210. For example, an electronic component 202 for implementing a function of the electronic device 201 may be disposed on the first substrate 241. For example, the electronic component 202 such as a GPS module, an antenna, a sensor, and/or a speaker may be disposed on the first substrate 241.

According to an embodiment, the first substrate 241 may be electrically connected to the at least one battery cell 220 in the battery housing 210 to transmit power provided from the at least one battery cell 220 to the electronic component 202 disposed on the first substrate 241. For example, an electrical connection between the first substrate 241 and the at least one battery cell 220 may be required to provide the power for an operation of the electronic component 202.

According to an embodiment, the rod 231 may be configured to provide the electrical connection of the at least one battery cell 220 and the first substrate 241. For example, an electrical path of the power provided from the at least one battery cell 220 to the first substrate 241 may be provided. For example, the rod 231 may provide the electrical connection between the at least one battery cell 220 and the first substrate 241. For example, the rod 231 may be electrically connected to the first electrode and the second electrode of the at least one battery cell 220. For example, the first substrate 241 spaced apart from the battery housing 210 may be electrically connected to the at least one battery cell 220 through a first conductive member 411 and a second conductive member 412 extending into the first substrate 241 from the rod 231 electrically connected to the at least one battery cell 220.

According to an embodiment, the electronic device 201 may include the first conductive member 411 and the second conductive member 412. For example, the first conductive member 411 may be electrically connected to the first case 211 electrically connected to the first electrode. For example, the first conductive member 411 may be connected to the first substrate 241 disposed in the body 232 by extending into the rod 231 and the body 232. For example, the first conductive member 411 may be electrically connected to the second case 212 electrically connected to the second electrode. For example, the second conductive member 412 may be connected to the first substrate 241 disposed in the body 232 by extending into the rod 231 and the body 232. For example, the first substrate 241 may be electrically connected to the first electrode of the at least one battery cell 220 through the first conductive member 411, and may be electrically connected to the second electrode of the at least one battery cell 220 through the second conductive member 412.

According to an embodiment, the rod 231 may include a first portion 231a and a second portion 231b electrically isolated from each other. For example, when the rod 231 is completely inserted into the through hole 213, at least a portion of the first portion 231a may be electrically connected to the first case 211 by being in contact with the first case 211. For example, the first conductive member 411 may electrically connect the first substrate 241 and the first electrode by being connected to the first portion 231a and the first substrate 241. For example, the first conductive member 411 may be connected to the first substrate 241 disposed in the body 232 by extending from an inside of the first portion 231a.

According to an embodiment, when the rod 231 is completely inserted into the through hole 213, the second portion 231b may be electrically connected to the second case 212. For example, the second portion 231b of the rod 231 may be electrically connected by being in contact with a portion of the second case 212. For example, a conductive plate 420 may be disposed in the battery housing 210. For example, the conductive plate 420 may be electrically connected to the second case 212 through a conductive connecting structure 430. For example, the conductive connecting structure 430 may be referred to as a connection member for electrically connecting the second case 212 and the conductive plate 420, such as a c-clip, conductive poron, and/or a conductive pin. For example, when the rod 231 is completely inserted into the through hole 213, at least a portion of the rod 231 may be in contact with the conductive plate 420 electrically connected to the second case 212. For example, the second conductive member 412 may electrically connect the first substrate 241 and the second electrode by being connected to the second portion 231b and the conductive plate 420. For example, the second conductive member 412 may be connected to the first substrate 241 disposed in the body 232 by extending from an inside of the second portion 231b.

According to an embodiment, power provided to the electronic component 202 disposed on the first substrate 241 may be transmitted from the at least one battery cell 220 through the rod 231, the first conductive member 411, and the second conductive member 412. For example, a current may flow from the first electrode to the first case 211 electrically connected to the first electrode. The current may be provided to the first substrate 241 by flowing to the first conductive member 411 through the first portion 231a in contact with the first case 211. After being provided to the electronic component 202 disposed on the first substrate 241, the current may flow back to the second electrode through the first substrate 241, the second conductive member 412, the second portion 231b, and the second case 212. The above-described flow of the current may be formed opposite to the above-described flow according to polarity of the first electrode and polarity of the second electrode. For example, the current may flow from the second electrode to the second case 212 electrically connected to the second electrode. The current may be provided to the first substrate 241 by flowing to the second conductive member 412 through the second portion 231b in contact with the second case 212. After being provided to the electronic component 202 disposed on the first substrate 241, the current may flow back to the first electrode through the first substrate 241, the first conductive member 411, the first portion 231a, and the first case 212.

According to an embodiment, the electronic component 202 may be configured to operate using power provided from the at least one battery cell 220 by a flow of the current. For example, the first conductive member 411 and the second conductive member 412 may be grounded for the at least one battery cell 220 by electrically connecting the at least one battery cell 220 to a ground layer of the first substrate 241. For example, the first conductive member 411 and the second conductive member 412 may be referred to as wiring, a signal line, a wire, and/or a cable in terms of providing an electrical path for transmitting power. Through the above-described structure, since the electronic component 202 may be electrically connected to the at least one battery cell 220, the electronic device 201 may provide various functions to the user.

FIG. 5 illustrates an electronic device including a second substrate according to an embodiment.

In a case of the above-described electronic device 201, a structure in which power is provided to a first substrate (e.g., the first substrate 241 of FIG. 4) disposed in a body 232 may be included, but is not limited thereto. For example, as illustrated in FIG. 5, according to an embodiment, the electronic device 201 may include a structure in which power is provided to a second substrate 242 disposed in a battery housing 210.

Referring to FIG. 5, the second substrate 242 may be disposed in the battery housing 210. The second substrate 242 disposed in the battery housing 210 may be electrically connected to at least one battery cell 220 through a rod 231 inserted into a through hole 213. For example, battery protection circuitry 203 may be disposed on the second substrate 242.

For example, the battery protection circuitry 203 may need to be electrically connected to the at least one battery cell 220 to detect overdischarge, overcurrent, and/or short circuit of a battery and to control charging and/or discharging of the at least one battery cell 220. For example, the battery protection circuitry 203 disposed on the second substrate 242 may perform various functions to protect the battery cell 220 by being electrically connected to the at least one battery cell 220 through the rod 231.

According to an embodiment, the rod 231 may be configured to provide an electrical connection between the at least one battery cell 220 and the second substrate 242. For example, in a state in which the rod 231 is completely inserted into the through hole 213, the rod 231 may be electrically connected to a first case 211 and the second substrate 242. For example, when the rod 231 is completely inserted into the through hole 213, the second substrate 242 may be in contact with a second portion 231b of the rod 231 or may be disposed close to the second portion 231b of the rod 231 in the battery housing 210. For example, the second substrate 242 may be positioned at an end of the through hole 213.

For example, in the state in which the rod 231 is completely inserted into the through hole 213, the rod 231 may be electrically connected to the first case 211. For example, a first potion 231a of the rod 231 may be electrically connected to the first case 211 by being in contact with the first case 211. For example, an outer surface of the first case 211 may be exposed in the through hole 213, and the first portion 231a may be coupled to the outer surface of the first case 211 exposed in the through hole 213. For example, the first portion 231a in contact with the first case 211 may include a screw line coupled to a screw line of the outer surface of the first case 211, but is not limited thereto. For example, the rod 231 may be in contact with the first case 211 by being inserted into the through hole 213 in a fitted manner. For example, when the rod 231 is completely inserted into the through hole 213, the end of the rod 231 may be electrically connected to the second substrate 242. For example, the second substrate 242 may be electrically connected to a first electrode through the rod 231 electrically connected to the first case 211.

According to an embodiment, the second substrate 242 may be electrically connected to a second case 212. For example, the electronic device 201 may include a conductive connecting structure 430 electrically connecting the second case 212 and the second substrate 242. For example, the conductive connecting structure 430 may be referred to as a connection member for electrically connecting the second case 212 and the second substrate 242, such as a c-clip, conductive poron, and/or a conductive pin. For example, a portion of the conductive connecting structure 430 may be in contact with the second case 212, and another portion of the conductive connecting structure 430 may be in contact with the second substrate 242. For example, the second substrate 242 may be electrically connected to a second electrode through the conductive connecting structure 430 electrically connected to the second case 212.

According to an embodiment, the second substrate 242 may be electrically connected to the at least one battery cell 220 through the rod 231 and the conductive connecting structure 430. For example, the battery protection circuitry 203 disposed on the second substrate 242 may be electrically connected to the at least one battery cell 220. For example, the battery protection circuitry 203 may perform an operation for protecting the at least one battery cell 220 by being electrically connected to the at least one battery cell 220. For example, the battery protection circuitry 203 may perform overcharge protection, overdischarge protection, overcurrent protection, and/or short-circuit protection by being electrically connected to the at least one battery cell 220.

According to an embodiment, power to be provided to the second substrate 242 may be transmitted from the at least one battery cell 220 through the rod 231 and the conductive connecting structure 430. For example, a current may flow to the rod 231 through the first portion 231a in contact with the first case 211. Since the second portion 231b is in contact with the first substrate 242, the current may be provided to the second substrate 242 by flowing from the first portion 231a to the second portion 231b. After being provided to the battery protection circuitry 203 disposed on the second substrate 242, the current may flow to the second electrode through the conductive connecting structure 430 and the second case 212. The above-described flow of the current may be formed opposite to the above-described flow according to polarity of the first electrode and polarity of the second electrode. For example, the current may flow to the second substrate 242 through the conductive connecting structure 430 in contact with the second case 212. After being provided to the battery protection circuitry 203 disposed on the second substrate 242, the current may flow to the second portion 231b in contact with the first substrate 242. After flowing from the second portion 231b to the first portion 231a, the current may flow to the first electrode through the first case 211 in contact with the first portion 231a.

In a case of the electronic device 201 illustrated in FIGS. 4 and 5, the battery housing 210 and a housing 230 may be easily separated when a user withdraws the rod 231 from the through hole 213. Since the housing 230 and the battery housing 210 may be detachably coupled to each other, the battery may be easily replaced. For example, in a case that the at least one battery cell 220 is completely discharged while using the electronic device 201, the battery may be easily replaced by replacing the discharged battery housing 210 with a battery housing 210 including the at least one charged battery cell 220. According to an embodiment, the electronic device 201 may provide user convenience, since not only electrical connection between the at least one battery cell 220 and the substrate 241 or 242 is possible, but also easy replacement of the battery housing 210 is possible.

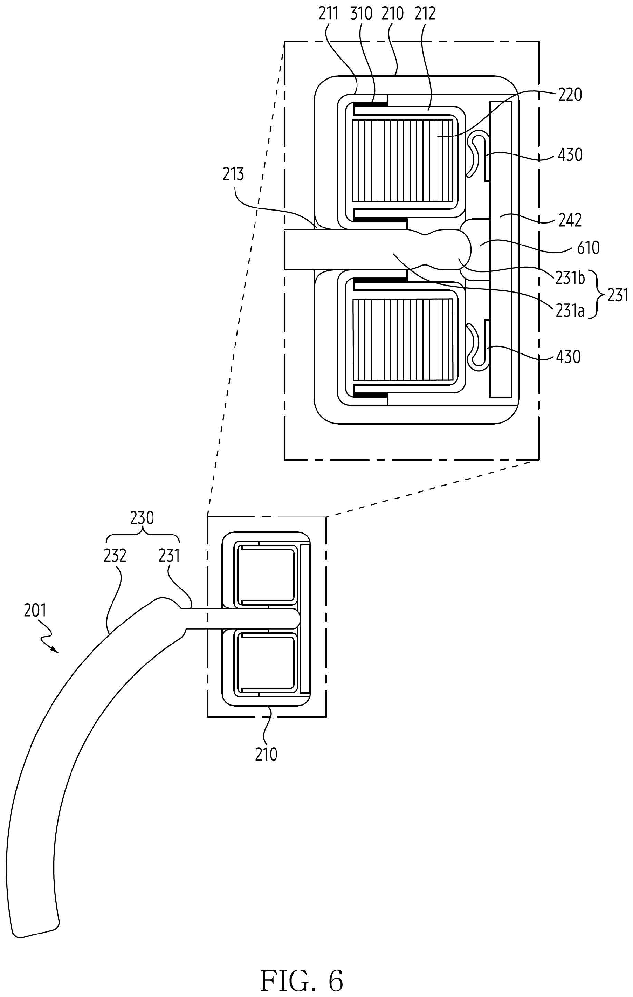

FIG. 6 illustrates an electronic device including a fastening structure according to an embodiment.

Referring to FIG. 6, an electronic device 201 may include a fastening structure 610. For example, the fastening structure 610 may provide an electrical connection of a second portion 231b and a second substrate 242. For example, the fastening structure 610 may be disposed on the second substrate 242. For example, in a state in which a rod 231 is completely inserted into a through hole 213, at least a portion of the second portion 231b may be coupled to the fastening structure 610. For example, by the rod 231 being coupled to the fastening structure 610, a battery housing 210 and a housing 230 may be fastened.

According to an embodiment, the fastening structure 610 may be implemented as a magnet coupled to the second portion 231b using a magnetic force and/or a socket into which a portion of the second portion 231b is inserted, but is not limited thereto. For example, the rod 231 may be coupled to the fastening structure 610 by a shape of the fastening structure 610 corresponding to a shape of the rod 231. For example, when the rod 231 is coupled to the fastening structure 610, the rod 231 and the second substrate 242 may be electrically connected through the fastening structure 610. The fastening structure 610 may maintain coupling between the housing 230 and the battery housing 210 by fixing the rod 231. For example, the fastening structure 610 may provide reliability of a connection between the housing 230 and the battery housing 210.

According to an embodiment, a first case 211 electrically connected to a first electrode may be electrically connected to a first portion 231a by being in contact with the first portion 231a. Since at least a portion of the second portion 231b extending from the first portion 231a may be coupled to the fastening structure 610, the first electrode may be electrically connected to the second substrate 242 through the first case 211, the rod 231, and the fastening structure 610. The second substrate 242 may be electrically connected to a second case 212 electrically connected to a second electrode through a conductive connecting structure 430.

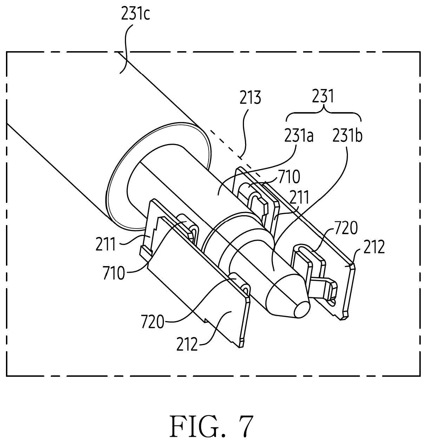

FIG. 7 illustrates a through hole into which a rod is inserted.

Referring to FIG. 7, when a rod 231 is inserted into a through hole 213, the rod 231 may be electrically connected to a first case 211 and a second case 212. For example, a first connection member 710 electrically connecting the first case 211 and a first portion 231a and a second connection member 720 electrically connecting the second case 212 to a second portion 231b may be disposed in the through hole 213. For example, the first connection member 710 may be electrically connected to the first case 211, and the second connection member 720 may be electrically connected to the second case 212. For example, the first connection member 710 may be in contact with an inside of the first case 211. For example, the second connection member 720 may be in contact with an inside of the second case 212.

According to an embodiment, the first connection member 710 and the second connection member 720 may be disposed in the through hole 213 into which the rod 231 is inserted, and the rod 231 may be electrically connected to the first case 211 and the second case 212 through the first connection member 710 and the second connection member 720. According to an embodiment, the rod 231 may include a flange portion 231c having a diameter larger than that of the through hole 213 to limit a depth inserted into the through hole 213. The depth of the rod 231 that may be inserted into the through hole 213 may be limited by the flange portion 231c.

According to an embodiment, when the rod 231 is inserted into the through hole 213, the first connection member 710 may be positioned in a portion of the through hole 213 where the first portion 231a is positioned, and the second connection member 720 may be positioned in a portion of the through hole 213 where the second portion 231b is positioned. For example, the rod 231 may be electrically connected to a first electrode and a second electrode through the first connection member 710 and the second connection member 720. For example, an end of the second portion 231b may be electrically connected to a second substrate (e.g., the second substrate 242 of FIG. 5) positioned at an end of the through hole 213. For example, the second substrate 242 may be electrically connected to at least one battery cell (e.g., the at least one battery cell 220 of FIG. 5) by being electrically connected to the first electrode and the second electrode through the rod 231.

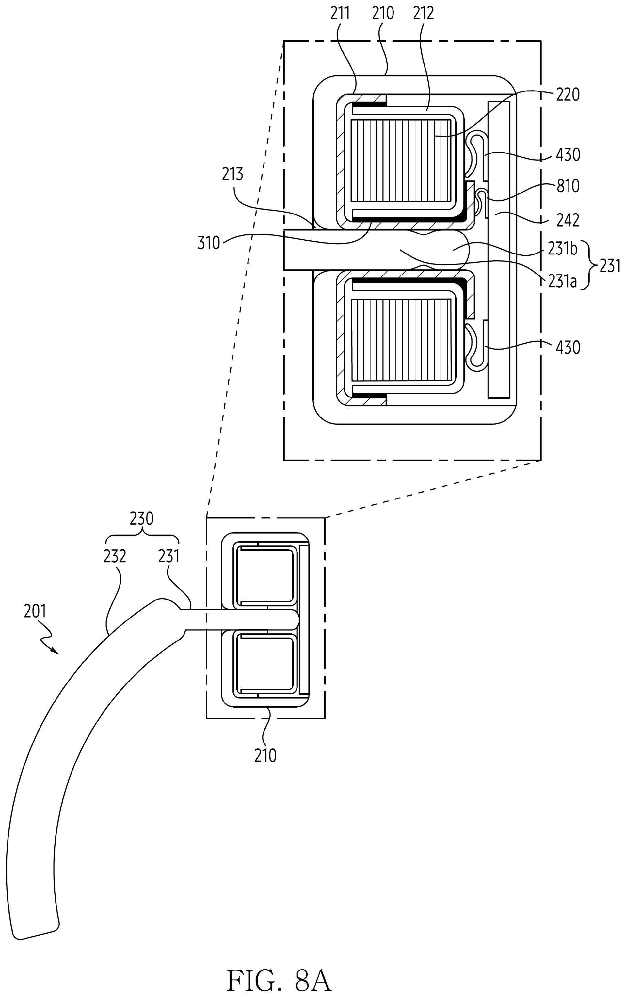

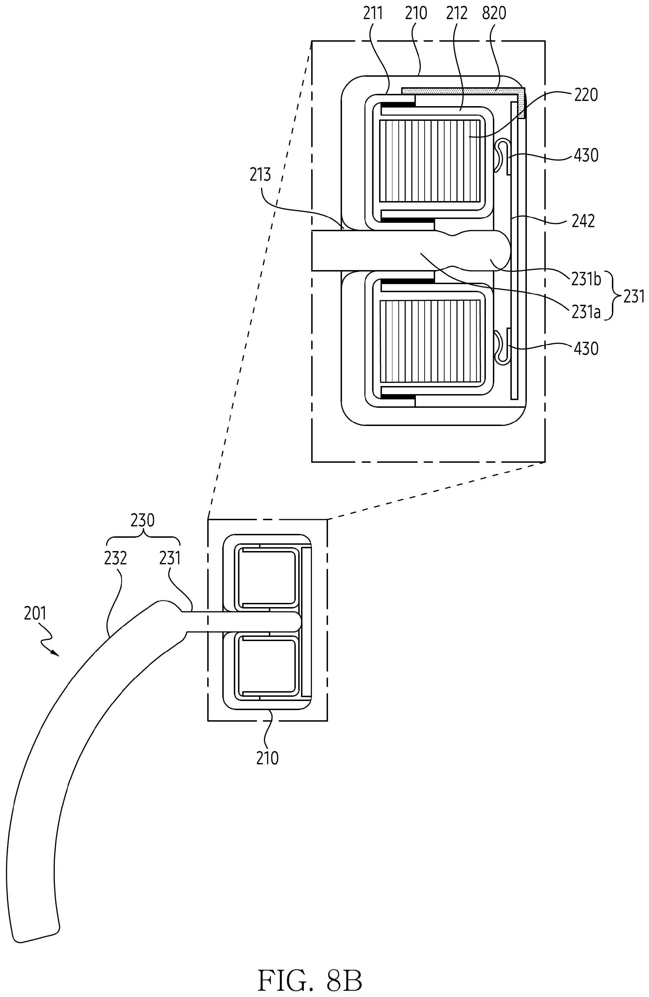

FIGS. 8A and 8B illustrate an electronic device according to an embodiment.

As described above, a rod 231 may provide an electrical connection between at least one battery cell 220 and a substrate 241 or 242, but is not limited thereto. According to an embodiment, the rod 231 may be used as a structure for fastening a battery housing 210 and a housing 230 regardless of the electrical connection. For example, in an example illustrated in FIGS. 8A and 8B, the rod 231 may only be used as the structure for fastening between the battery housing 210 and the housing 230 without providing an electrical connection between the at least one battery cell 220 and the second substrate 242. In an embodiment, a case of a battery 189 and the rod 231 are not electrically connected to each other and may provide an electrical path between an electronic component 202 (e.g., a sensor, an antenna pattern) included in a body 232 and the second substrate 242.

Referring to FIG. 8A, a first case 211 may be electrically connected to the second substrate 242 by extending toward the second substrate 242. For example, a portion 211a of the first case 211 forming a through hole 213 may be in direct contact with the second substrate 242 by extending toward the second substrate 242. As the portion 211a of the first case 211 is contacted with the second substrate, it may be electrically connected to the second substrate 242. Alternatively, the portion of the first case 211 forming the through hole 213 may extend toward the second substrate 242, and a connection member 810 (e.g., a C-clip) in contact with the extended portion of the first case 211 and the second substrate 242 may electrically connect the first case 211 and the second substrate 242. For example, the second substrate 242 may be electrically connected to a second case 212 through a conductive connecting structure 430.

According to an embodiment, as the portion 211a of the first case 211 extends toward the second substrate 242, a contact area of the first case 211 and the second case 212 may be increased. A spacer 310 for electrically isolating the first case 211 and the second case 212 may be disposed along the contact portion of the first case 211 and the second case 212. The first case 211 may be electrically isolated from the second case 212 by the spacer 310.

Referring to FIG. 8B, an electronic device 201 may include a connection member 820 (e.g., a wire) for electrically connecting the first case 211 and the second substrate 242. According to an embodiment, the connection member may be in contact with the second substrate 242 by being in contact with the first case 211, and extending along an inner peripheral surface of the battery housing 210. For example, the second substrate 242 may be electrically connected to the first case 211 through the connection member. For example, the second substrate 242 may be electrically connected to the second case 212 through the conductive connecting structure 430.

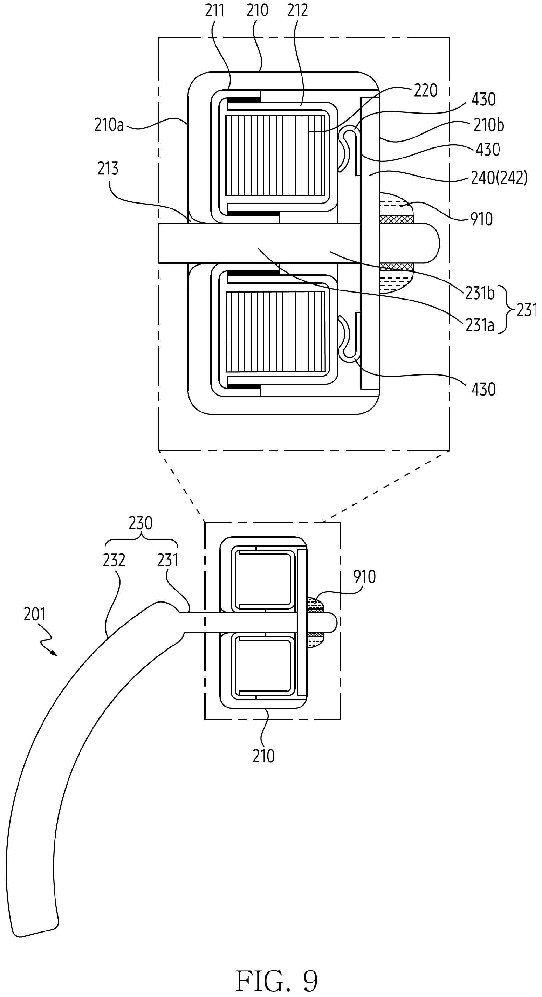

FIG. 9 illustrates an electronic device including a fixing structure according to an embodiment.

Referring to FIG. 9, according to an embodiment, an electronic device 201 may include a fixing structure 910. According to an embodiment, the fixing structure 910 may fix a rod 231 passing through a through hole 213 to a battery housing 210.

According to an embodiment, the battery housing 210 may include a first surface 210a and a second surface 210b opposite to the first surface 210a. For example, the rod 231 may be inserted into the through hole 213 in a direction facing the second surface 210b from the first surface 210a. For example, the through hole 213 may pass through the second surface 210b from the first surface 210a. For example, the rod 231 may pass through the second surface 210b by being inserted into the first surface 210a. For example, when the rod 231 is completely inserted into the through hole 213, an end of the rod 231 may be exposed to an outside of the battery housing 210.

According to an embodiment, the fixing structure 910 may fix the rod 231 exposed to the outside of the through hole 213. Since the rod 231 is exposed to the outside of the through hole 213, in a case that the rod 231 exposed to the outside of the through hole 213 is not fixed, the battery housing 210 and a housing 230 may not be fastened. For example, the fixing structure 910 may fasten the housing 230 and the battery housing 210 by fixing the rod 231 exposed to the outside of the through hole 213 to the battery housing 210. For example, the fixing structure 910 may include a through hole into which the rod 231 is inserted. A portion of the rod 231 passing through the through hole 213 of the battery housing 210 may be inserted into the through hole of the fixing structure 910, and the rod 231 and the battery housing 210 may be fastened by the fixing structure 910 being coupled to the second surface 210b of the battery housing 210. For example, as the fixing structure 910 fixes the rod 231 to the battery housing 210, an electrical connection between the rod 231 and the first case 211 and/or an electrical connection between the rod 231 and the second substrate 242 may be stably established.

The above-described embodiment has been described as a structure in which the fixing structure 910 is coupled to the second surface 210b, but is not limited thereto. For example, the fixing structure 910 may fix the rod 231 by being coupled to the first surface 210a, or be coupled to the first surface 210a and the second surface 210b, respectively.

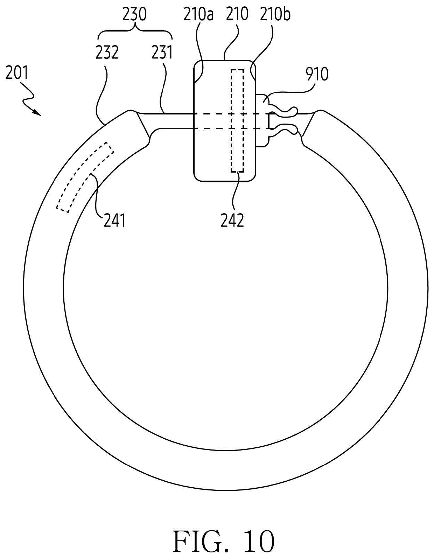

FIG. 10 illustrates an electronic device including a ring-shaped housing according to an embodiment.

According to an embodiment, a housing 230 may have a substantially ring shape. For example, the housing 230 may have the substantially ring shape extending from a first surface 210a of a battery housing 210 to a second surface 210b of the battery housing 210. For example, referring to FIG. 10A, a portion of a rod 231 may pass through the battery housing 210. For example, a body 232 may extend from an end of the rod 231 positioned in a direction in which the first surface 210a faces to another end of the rod 231 positioned in a direction in which the second surface 210b faces to have the ring shape. According to an embodiment, the ring-shaped housing 230 may be worn on an ear of a user. For example, an electronic device 201 may be an earring device operating in a state of being worn on the ear of the user. Since the rod 231 may provide an electrical connection between at least one battery cell 220 and a substrate (e.g., the first substrate 241 and/or the second substrate 242 of FIG. 2), the electronic device 201 may implement various functions in a state of being worn on a body of the user, using power provided from the at least one battery cell 220. Since the electronic device 201 is used in the state of being worn on the body of the user, the battery housing 210 may form a portion of an exterior by being coupled to the ring-shaped housing 230. According to an embodiment, in a case that the electronic device 201 is implemented as the earring device, the battery housing 210 may be used as a design element, since the battery housing 210 may be recognized as an accessory form by forming the portion of the exterior of the earring.

An electronic device 201 is provided. The electronic device 201 may comprise a battery 189, and a housing 230. The battery 189 may include a first case 211, a second case 212, and at least one battery cell 220. The first case 211 may include a first through hole 213. The second case 212 may include a second through hole 213b at least partially aligned with the first through hole 213a. The second case 212 may be coupled to the first case 211. The at least one battery cell 220 may include a first electrode electrically connected to the first case 211, and a second electrode electrically connected to the second case 212. The at least one battery cell 220 may be accommodated in the first case 211 and the second case 212. The housing 230 may include a rod 231 and a body 232. The rod 231 may be at least partially inserted into the first through hole 213a and the second through hole 213b. The rod 231 may be electrically connected to the at least one battery cell 220 by being electrically connected to the first electrode and the second electrode. The body 232 may extend from the rod 231. The rod 231 may be configured to provide an electrical path for power provided from the battery 189.

The electronic device 101 may further comprise a battery housing 210, and a first substrate 241. The battery housing 210 may surround at least a portion of the battery 189. The first substrate 241 may be disposed in the body 232. The first substrate 241 may be spaced apart from the battery housing 210. The rod 231 may be configured to provide an electrical connection between the battery 189 and the first substrate 241.

According to an embodiment, the electronic device 201 may further comprise a first conductive member 411, and a second conductive member 412. The first conductive member 411 may be electrically connected to the first case 211. The first conductive member 411 may be connected to the first substrate 241, by extending into the rod 231 and the body 232. The second conductive member 412 may be electrically connected to the second case 212. The second conductive member 412 may be connected to the first substrate 241, by extending into the rod 231 and the body 232.

According to an embodiment, the electronic device 201 may further comprise a second substrate 242, and a conductive plate 420. The second substrate 242 may be disposed in the battery housing 210. The second substrate 242 may be electrically connected to the second case 212. The conductive plate 420 may further comprise the conductive plate 420 disposed in the battery housing 210 and electrically connected to the second case 212. The rod 231 may include a first portion 231a at least partially in contact with the first case 211, and a second portion 231b, at least partially in contact with the conductive plate 420, electrically isolated from the first portion 231a. The first conductive member 411 may be connected to the first portion 231a and the first substrate 241. The second conductive member 412 may be connected to the second portion 231b and the second substrate 242.

According to an embodiment, the electronic device 201 may further comprise an electronic component 202, disposed on the first substrate 241, configured to operate using power provided from the at least one battery cell 220 through the first substrate 241.

According to an embodiment, the rod 231 may be electrically connected to the first case 211 and the second substrate 242, in the first through hole 213a and the second through hole 213b.

According to an embodiment, the electronic device 201 may further comprise a conductive connecting structure 430 electrically connecting the second case 212 and the second substrate 242.

According to an embodiment, the rod 231 may include a first portion 231a in contact with the first case 211, and a second portion 231b, electrically connected to the second substrate 242, electrically isolated from the first portion 231a.

According to an embodiment, the electronic device 201 may further comprise a fastening structure 610, disposed on the second substrate 242, providing an electrical connection between the second portion 231b and the second substrate 242 by being fastened to the second portion 231b.

According to an embodiment, the electronic device 201 may further comprise battery protection circuitry 203 disposed on the second substrate 242.

According to an embodiment, the through hole 213 may extend from a first surface 210a of the battery housing 210 to a second surface 210b opposite to the first surface 210a. The rod 231 may pass through the second surface 210b from the first surface 210a. The electronic device 201 may further comprise a fixing structure 910 for fixing the rod 231, passing through the second surface 210b, to the battery housing 210.

According to an embodiment, the housing 230 may have a ring shape extending from a first surface 210a of the battery housing 210 to a second surface 210b opposite to the first surface 210a.

According to an embodiment, the at least one battery cell 220 may include a positive electrode material 220a, a negative electrode material 220b, and a separator 220c wound around the through hole 213.

According to an embodiment, the at least one battery cell 220 may include a through hole corresponding to the first through hole 213. The at least one battery cell 220 may include a positive electrode material 220a, a negative electrode material 220b, and a separator 220c stacked inside the battery housing 210.

According to an embodiment, the electronic device 201 may further comprise a spacer 310, disposed between the first case 211 and the second case 212, electrically isolating the first case 211 and the second case 212 to each other.

An electronic device 201 is provided. The electronic device 201 may comprise a battery housing 210, at least one battery cell 220, a housing 230, a first substrate 241, and a second substrate 242. The battery housing 210 may include a first case 211, a second case 212 coupled to the first case 211, and a through hole 213 passing through the first case 211 and the second case 212. The at least one battery cell 220 may include a first electrode electrically connected to the first case 211 and a second electrode electrically connected to the second case 212. The at least one battery cell 220 may be accommodated in the battery housing 210. The housing 230 may include a rod 231 and a body 232. The rod 231 may be at least partially inserted into the through hole 213. The rod 231 may be electrically connected to the at least one battery cell 220 by being electrically connected to the first electrode and the second electrode. The housing 230 may extend from the rod 231. The first substrate 241 may be disposed in the body 232. An electronic component 202 for the electronic device 201 may be disposed on the first substrate 241. The second substrate 242 may be disposed in the battery housing 210. Battery protection circuitry 203 may be disposed on the second substrate 242. The rod 231 may be configured to provide an electrical path of power provided from the at least one battery cell 220 to at least one of the first substrate 241 or the second substrate 242.

According to an embodiment, the electronic device 201 may further comprise a first conductive member 411 and a second conductive member 412. The first conductive member 411 may be electrically connected to the first case 211. The first conductive member 411 may be connected to the first substrate 241 by extending into the rod 231 and the body 232. The second conductive member 412 may be electrically connected to the second case 212. The second conductive member 412 may be connected to the first substrate 241 by extending into the rod 231 and the body 232.

According to an embodiment, the electronic device 201 may further comprise a conductive plate 420 disposed in the battery housing 210 and electrically connected to the second case 212. The rod 231 may include a first portion 231a at least partially in contact with the first case 211 and a second portion 231b at least partially in contact with the conductive plate 420 and electrically isolated from the first portion 231a. The first conductive member 411 may be connected to the first portion 231a and the first substrate 241. The second conductive member 412 may be connected to the second portion 231b and the second substrate 242.

According to an embodiment, the electronic device 201 may further comprise a conductive connecting structure 430 electrically connecting the second case 212 and the second substrate 242. The rod 231 may be electrically connected to the first case 211 and the second substrate 242 in the through hole 213.

According to an embodiment, the through hole 213 may extend from a first surface 210a of the battery housing 210 to a second surface 210b opposite to the first surface 210a. The rod 231 may pass through the second surface 210b from the first surface 210a. The electronic device 201 may further comprise a fixing structure 910 for fixing the rod 231 passing through the second surface 210b to the battery housing 210.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a battery, the battery including:
a first case including a first through hole,
a second case, including a second through hole at least partially aligned with the first through hole, coupled to the first case, and
at least one battery cell accommodated in the first case and the second case, the at least one battery cell including a first electrode electrically connected to the first case, and a second electrode electrically connected to the second case; and
a housing including:
a rod at least partially inserted into the first through hole and the second through hole, and electrically connected to the at least one battery cell by being electrically connected to the first electrode and the second electrode, and
a body extending from the rod,
wherein the rod is configured to provide an electrical path for power provided from the battery.

2. The electronic device of claim 1, further comprising:
a battery housing surrounding at least a portion of the battery; and
a first substrate, disposed in the body, spaced apart from the battery housing,
wherein the rod is configured to provide an electrical connection between the battery and the first substrate.

3. The electronic device of claim 2, further comprising:
a first conductive member connected to the first substrate, by being electrically connected to the first case and extending into the rod and the body; and
a second conductive member connected to the first substrate, by being electrically connected to the second case and extending into the rod and the body.

4. The electronic device of claim 3, further comprising:
a second substrate, disposed in the battery housing, electrically connected to the second case; and
a conductive plate disposed in the battery housing, electrically connected to the second case,
wherein the rod includes:
a first portion at least partially in contact with the first case, and
a second portion, at least partially in contact with the conductive plate, electrically isolated from the first portion,
wherein the first conductive member is connected to the first portion and the first substrate, and
wherein the second conductive member is connected to the second portion and the conductive plate.

5. The electronic device of any one of claims 2 to 4, further comprising an electronic component, disposed on the first substrate, configured to operate using power provided from the at least one battery cell through the first substrate.

6. The electronic device of any one of claims 1 to 5, further comprising a second substrate electrically connected to the second case,
wherein the rod is electrically connected to the first case and the second substrate, in the first through hole and the second through hole.

7. The electronic device of claim 6, further comprising a conductive connecting structure electrically connecting the second case and the second substrate.

8. The electronic device of any one of claims 6 or 7,
wherein the rod includes:
a first portion in contact with the first case, and
a second portion, electrically connected to the second substrate, electrically isolated from the first portion.

9. The electronic device of claim 8, further comprising
a fastening structure, disposed on the second substrate, providing an electrical connection between the second portion and the second substrate by being fastened to the second portion.

10. The electronic device of any one of claims 6 to 9, further comprising battery protection circuitry disposed on the second substrate.

11. The electronic device of any one of claims 1 to 10,
wherein the through holes extend from a first surface of the battery housing to a second surface opposite to the first surface,
wherein the rod passes through the second surface from the first surface, and
wherein the electronic device further comprises a fixing structure for fixing the rod, passing through the second surface, to the battery housing.

12. The electronic device of any one of claims 1 to 11,
wherein the housing has a ring shape extending from a first surface of the battery housing to a second surface opposite to the first surface.

13. The electronic device of any one of claims 1 to 12,
wherein the at least one battery cell includes a positive electrode material, a negative electrode material, and a separator wound around the through hole.

14. The electronic device of any one of claims 1 to 13,
wherein the at least one battery cell includes a through hole corresponding to the second through holes, and includes a positive electrode material, a negative electrode material, and a separator stacked inside the battery housing.

15. The electronic device of any one of claims 1 to 14, further comprising a spacer, disposed between the first case and the second case, electrically isolating the first case and the second case to each other.
